# EUROPEAN PATENT APPLICATION

(11) **EP 2 341 722 A1**
(43) Date of publication of application: **06.07.2011**
(21) Application number: 09821539.5
(22) Date of filing: 13.08.2009
(51) Int. Cl.: H04W 8/02

(54) **METHOD, APPARATUS AND SYSTEM FOR MOBILE NODE LOCATION MANAGEMENT**

(30) Priority: 23.10.2008 CN 200810170590
(71) Applicant: Huawei Technologies Co., Ltd., Shenzhen, Guangdong 518129 (CN)
(72) Inventor: GONG, Xiaoyu, Guangdong 518129 (CN); ZHOU, Qian, Guangdong 518129 (CN); LI, Hongguang, Guangdong 518129 (CN)
(74) Representative: Körber, Martin Hans
(86) International application number: PCT/CN2009/073227
(87) International publication number: WO 2010/045818

(57) **Abstract**

A method, device, and system for mobile node (MN) location management in a next generation network (NGN) architecture are provided, which belong to the network field. With the hierarchical management of a central management domain and local management domains, location information of the MN is proximately managed by a mobile management entity of the local management domain, thus resources between the MN and a network are saved, the location information management of the MN is made to be hierarchical and localized, and the traffic of signaling messages in the network and the transmission delay are reduced. Thus, system crash caused by single point failure of centralized central control in a non-hieranchical and non-localized structure is avoided.

## Description

### FIELD OF THE TECHNOLOGY

The present invention relates to the network field, and more particularly to a method, a device, and a system for mobile node (MN) location management.

### BACKGROUND

The conventional MN management solution based on a mobile network is as follows: the mobile network allocates a pair of Internet Protocol (IP) addresses for each MN, namely, a Home Address (HoA) and a Care of Address (CoA). The HoA is a permanent address registered by the MN at a home network of the MN and is adapted to uniquely identify the node on the network: no matter whether the MN is located in the home network, the HoA is kept unchanged. The CoA is a temporary address obtained when the MN moves to a foreign network and is adapted to determine a route for a datagram with a destination address being the MN. When the MN leaves the foreign network, the CoA is released. Therefore, when the MN is located in different foreign networks, it has different CoAs.

The mobile network realizes the support for the mobility of a node through cooperation of the MN, a home agent (HA), and a foreign agent. When the MN moves to a foreign agent domain, the MN obtains a CoA (the address may be obtained through the foreign agent, or obtained through dynamic host configuration), which serves as an address to which the HA is to forward the datagram. Before forwarding the datagram, the MN must register the Co4 thereof with the HA, so that the HA knows where to forward the datagram. After registration, the HA sends a registration response message to the MN indicating that the registration is successful, and a connection between the MN located in the foreign network domain and the home network is established. The datagram from a corresponding node (CN) first reaches the HA. The HA obtains the CoA of the mobile node by looking up a table, and forwards the datagram to the foreign agent identified by the CoA, and then sends the datagram to an end destination, i.e. the MN by the foreign agent. When the HA forwards the datagram to the MN, it is required to encapsulate the IP packet from the CN, substitute the CoA for the destination address of the packet, and then send the encapsulated IP packet to the MN.

In the next generation network (NGN), as the mobile user data plane and the mobile control plane are separate from each other, it has become a problem to be solved urgently to effectively and safely realize the MN location management.

### SUMMARY OF THE INVENTION

In order to solve the problem of MN location management in an NGN, the present invention provides the following technical solutions.

In an embodiment, the present invention provides a method for MN location management in an NGN.

The method for MN location management in an NGN includes the following steps.

The MN moves from a source local management domain to a destination local management domain; when the source local management domain and the destination local management domain are a same local management domain, a local location management functional entity corresponding to the source local management domain or the destination local management domain updates location information of the MN saved therein according to a received location registration request sent by the MN or an agent of the MN.

When the source local management domain and the destination local management domain are different local management domains, a destination local location management functional entity corresponding to the destination local management domain updates the location information of the MN saved therein according to the received location registration request sent by the MN or an agent of the MN, and instructs a source local management domain entity corresponding to the source local management domain to update the location information of the MN saved therein through a central mobility management functional entity.

In an embodiment, the present invention providers a local location management functional entity.

The local location management functional entity in an NGN includes a location information storage module, a receiving module, a location information updating module, and a sending module.

The location information storage module is adapted to save location information of an MN.

The receiving module is adapted to receive a location registration request sent by the MN or an agent of the MN and a notification of updating the location information of the MN sent by a central mobility management functional entity of a central management domain.

The location information updating module is adapted to update the location information of the MN saved in the location information storage module according to the location registration request or the notification received by the receiving module.

The sending module is adapted to instruct a source local management domain where the MN is located before moving to update the location information of the MN saved therein through a central mobility management functional entity of a central management domain corresponding to the local location management functional entity according to the location registration request, after determining that the MN is moved from a local management domain corresponding to the local location management functional entity to the local management domain.

In an embodiment, the present invention provides a system for MN location management in an NGN.

The system for MN location management in an NGN includes a central mobility management functional entity, a source local location management functional entity, and a destination local location management functional entity.

When the MN moves in a same local management domain, the destination local location management functional entity updates location information of the MN saved therein according to a received location registration request sent by the MN or an agent of the MN; the location information includes a Care of Address (CoA), a local domain address, and a network access identity of the MN.

When the MN moves between different local management domains, the destination local location management functional entity updates the location information of the MN saved therein according to a received location registration request sent by the MN or an agent of the MN, and instructs the source local location management functional entity to update the location information of the MN saved therein through the central mobility management functional entity.

In the present invention, mobile location management messages sent by MNs are proximately processed by the local management domain, and the messages are forwarded to the central management domain by the local management domain on behave of the MN, thereby saving air interface resources between the MN and a network. The location information management of the MN is hierarchical and localized, and the traffic of signaling messages in the network and the transmission delay of the signaling message are reduced. Thus, system crash caused by single point failure of central control in a non-hierarchical and non-localized structure is avoided.

### BRIEF DESCRIPTION OF THE DRAWINGS

FIG. 1 is a schematic view of a processing process when an MN moves within a local management domain and between local management domains according to an embodiment of the present invention;
FIG. 2 is a flow chart of a location information update process when the MN moves within a local management domains according to an embodiment of the present invention;
FIG. 3 is a flow chart of a location information update process performed when the MN moves from one local management domain to another local management domain according to an embodiment of the present invention;
FIG. 4 is a flow chart of a method for protecting an MN message according to an embodiment of the present invention;
FIG. 5 is a flow chart of a method for transmitting datagram to an MN when a CN does not know the current location of the MN according to an embodiment of the present invention:
FIG. 6 is a block diagram of a structure of a local location management functional entity according to an embodiment of the present invention; and
FIG. 7 is a block diagram of a system for MN location management according to an embodiment of the present invention.

### DETAILED DESCRIPTION OF THE EMBODIMENTS

In order to solve the problem of MN location management in the NGN, the present invention provides a method for MN location management in the NGN.

The conventional micro-mobility management technologies adopt a centralized mobile management control mode. A mobile agent located in a home domain plays a central role in the entire mobile management control in all mobile scenarios, that is, a centralized control mode based on an HA of the home domain. Thus, system crash caused by single point failure may occur,

In an embodiment, management domains are grouped into the central management domain and local management domain according the mobile scenario in the NGN, to weaken the mobile management control function of the central management domain, and move mobile management control functions to the local management domain. One central management domain is corresponding to one or more local management domains.

The local management domain is responsible for managing location information of the MN, the MN handover control, and forwarding the user data. The local management domain may further perform security protection of mobile signaling, and address translation of mobile signaling and user data stream.

The central management domain is responsible for managing domain location information of the MN when the MN hands over between different local management domains.

When the MN moves from one location to another location, after access authentication of a mobile service is completed and the location parameters of the MN are configured, the location information of the MN must be updated.

After the MN moves from a source local management domain to a destination local management domain, at the new location, the MN needs to complete the access authentication of the mobile service, and configure the location parameters of the MN, such as the CoA and the local domain address.

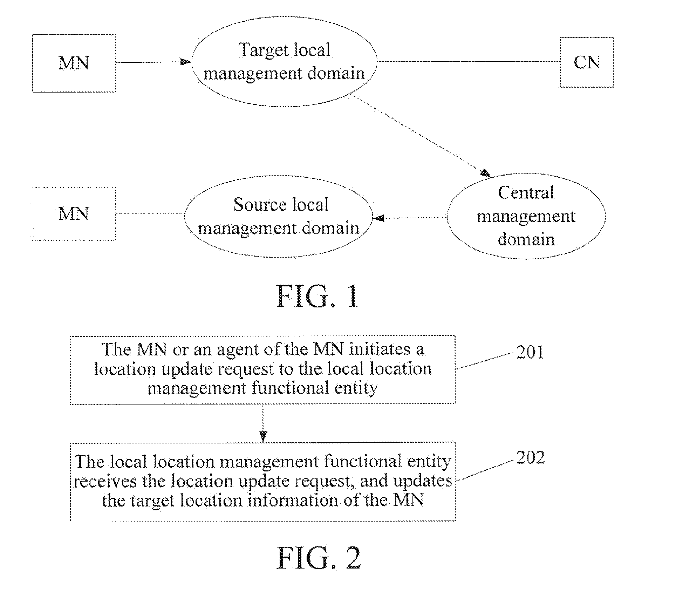

When the source local management domain and the destination local management domain are a same local management domain, as shown by the solid lines in FIG. 1, the MN moves within a local management domain, the functional entity that performs location management in the local management domain is the local location management function, and the location information update to be performed includes the following steps, as shown in FIG. 2.

In Step 201, the MN or an agent of the MN initiates a location update request to the local location management functional entity.

The location update request carries destination location information of the MN, and the destination location information includes a destination CoA (CoA after handover), a local domain address of the MN, and a destination network access identity, and can further include an HoA of the MN. It should be noted that, when the MN hands over in the same local management domain, the local domain address of the MN is not changed.

In Step 202, the local location management functional entity receives the location update request, and updates the destination location information of the MN.

Updating the destination location information of the MN includes deleting an source CoA of the MN, a local domain address of the MN, an source network access identity of the MN, and association relations there-between; and creating and saving an association relation between a new destination CoA of the MN, the local domain address of the MN and the destination network access identity. When the location information of the MN includes the HoA or the MN, the local location management functional entity creates and saves an association relation between the HoA of the MN, the destination CoA of the MN, the local domain address of the MN and the destination network access identity of the MN.

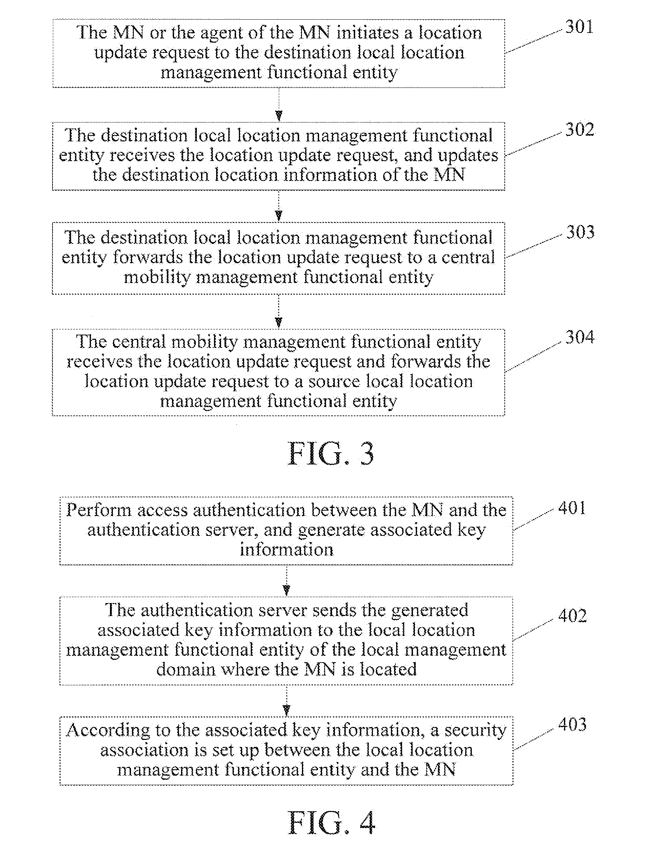

When the source local management domain and the destination local management domain are different local management domains, as shown by dotted lines in FIG. 1, the location information update to be performed includes the following steps, as shown in FIG. 3.

In Step 301, the MN or the agent of the MN initiates a location update request to the destination local location management functional entity.

The location update request carries the destination location information of the MN, and the destination location information includes the destination CoA of the MN (CoA after handover), the destination local domain address of the MN, the destination network access identity of the MN. and may further include the HoA of the MN.

In Step 302, the destination local location management functional entity receives the location update request, and updates the destination location information of the MN.

Updating the destination location information of the MN includes deleting a source CoA of the MN. a source local domain address of the MN, a source network access identity of the MN, and association relations there-between; and creating and saving an association relation between a new destination CoA of the MN, the destination local domain address of the MN and the destination network access identity of the MN. When the destination location information includes the HoA of the MN, the destination local location management functional entity creates and saves an association relation between the destination CoA of the MN, the destination local domain address of the MN, the HoA of the MN and the destination network access identity of the MN. Only when the destination local location management functional entity has saved the location information of the location where the MN has attached, the deletion process is needed; otherwise, the new location information only needs to be directly created.

In Step 303, the destination local location management functional entity forwards the location update request to a central mobility management functional entity.

In Step 304, the central mobility management functional entity receives the location update request and forwards the location update request to a source local location management functional entity, to instruct the source local location management functional entity to delete the source CoA of the MN, the source local domain address of the MN, the source network access identity of the MN, and association relations there-between.

In the above two situations, after updating the destination location information of the MN, the destination local location management functional entity instructs a destination mobile control functional entity to set up a new route or Internet Protocol (IP) tunnel, and the source local location management functional entity instructs the source mobile control functional entity to delete the old route and IP tunnel.

When the MN enters a local management domain for the first time, the location information of the MN is registered, which can be considered as a special update, so the processing process of the registration is similar to that described above, that is, only the null location information of the MN is updated to the new location information, so as to be distinguished from updating the old location information into the new location information. The two processes are rewriting and overwriting, and are substantially the same in principle.

When mobile signaling is transmitted between the MN and the local location management functional entity, some invalid mobile signaling may exist. At this time, a security association needs to be set up between the MN and the local location management functional entity, to protect the mobile signaling and filter the invalid mobile signaling, As shown in FIG. 4, protecting the MN message includes the following steps.

In Step 401, access authentication is performed between the MN and the authentication server, and associated key information is generated.

When the MN enters a local management domain for the first time or enters another new local management domain from a local management domain, access authentication of a mobile service needs to be performed. Such a process occurs between the MN and the authentication server, and the MN and the authentication server save a shared key, and according to the shared key, generates the associated key information required by the mobile signaling.

In Step 402, the authentication server sends the generated associated key information to the local location management functional entity of the local management domain where the MN is located.

In Step 403, according to the associated key information, a security association is set up between the local location management functional entity and the MN.

Through the security association that is set up, security protection is performed on the mobile signaling, and invalid mobile signaling messages are filtered off. The security association may be a security association based on network address.

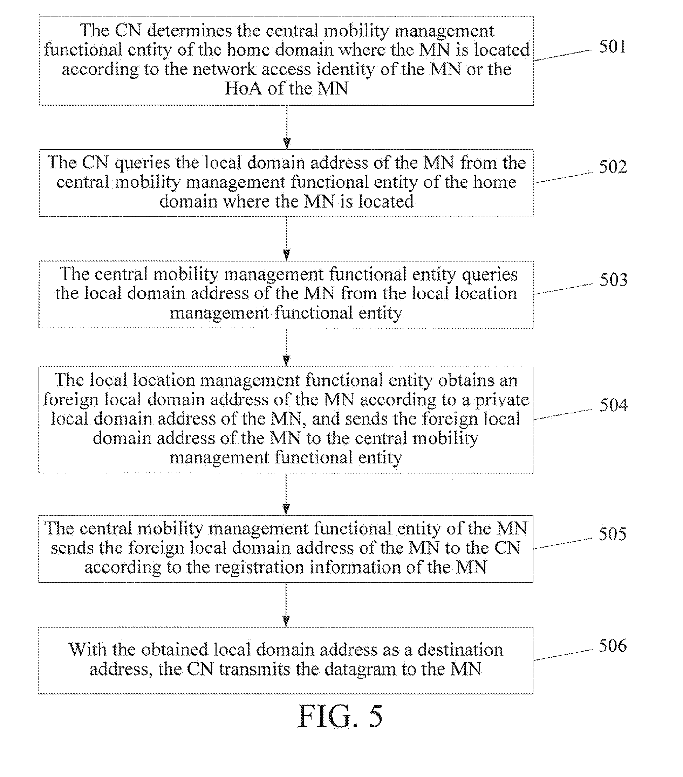

In the NGN, on the data plane, when the CN needs to send data to the MN, it needs to acquire the location information of the MN, so as to send datagram to the MN. According to the method of MN location management of the present invention, when the CN does not known the current location of the MN, as shown in FIG. 5, the following steps are performed.

In Step 501, the CN determines the central mobility management functional entity of the home domain where the MN is located according to the network access identity of the MN or the HoA of the MN.

In Step 502, the CN queries the local domain address of the MN from the central mobility management functional entity of the home domain where the MN is located.

In Step 503, the central mobility management functional entity queries the local domain address of the MN from the local location management functional entity.

In Step 504, the local location management functional entity obtains a foreign local domain address of the MN according to a private local domain address (CoA) of the MN, and sends the foreign local domain address of the MN to the central mobility management functional entity.

The private local domain address of the MN is registered when the MN registers the address with the local location management functional entity. When the CN sends data to the MN, it needs to know the foreign local domain address of the MN.

An anchor point gateway of mobile data exists at a boundary point of the local management domain, and the anchor point gateway has a mapping relation between the private local domain address and the foreign local domain address of the MN therein; and then the local location management functional entity queries the mapping relation between the private local domain address and the foreign local domain address of the MN from the anchor point gateway, and according to the private local domain address of the MN obtains the foreign local domain address of the MN.

In Step 505, the central mobility management functional entity of the MN sends the foreign local domain address of the MN to the CN according to the registration information of the MN.

In Step 506, with the obtained local domain address as a destination address, the CN transmits the datagram to the MN.

In this manner, the CN only obtains the foreign local domain address of the MN, and the detailed true location information of the MN is transparent for the CN, so as to ensure the security of the location information of the MN. At the same time, Network Address Transition (NAT) between the private network and public network during mobile handover is achieved.

In an embodiment, the present invention provides a local location management functional entity in an NGN.

The local location management functional entity is adapted to update location information of an MN saved therein according to a received location registration request sent by the MN or an agent of the MN when the MN moves within a local management domain corresponding to the local location management functional entity; and update the location information of the MN saved therein according to the received location registration request sent by the MN or the agent of the MN when the MN moves from outside the local management domain corresponding to the local location management functional entity to the local management domain, and instruct a source local management domain where the MN is located before moving to update the location information of the MN saved therein through a central management domain; or receive a notification of updating the location information of the MN sent by the central management domain, and update the location information of the MN saved therein according to the notification.

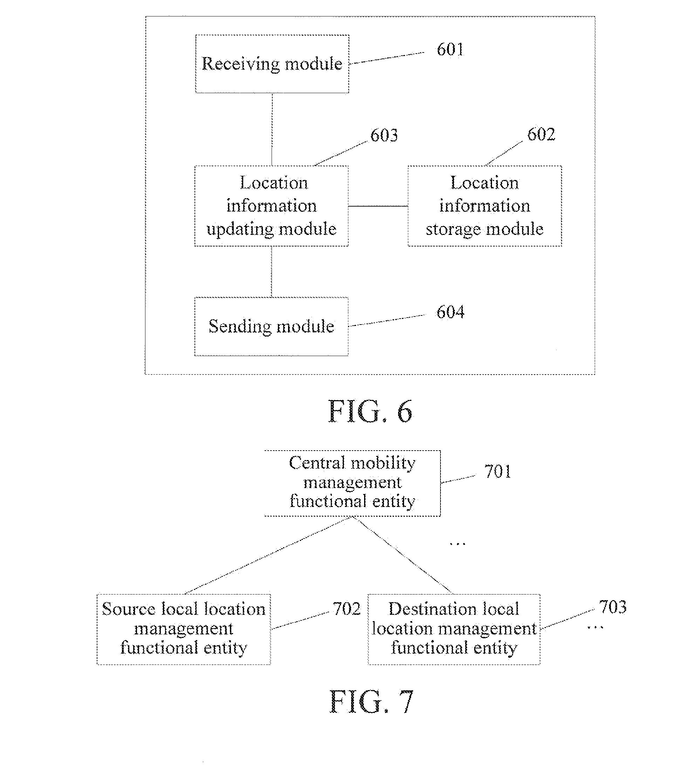

As shown FIG. 6, the local location management functional entity includes a receiving module 601, a location information storage module 602, a location information updating module 603, and a sending module 604.

The receiving module 601 is adapted to receive the location registration request sent by the MN or the agent of the MN and the notification of updating, the location information of the MN sent by the central management domain.

The location information storage module 602 is adapted to save the location information of the MN.

The location information updating module 603 is adapted to update the location information of the MN saved by the location information storage module 602 according to the location registration request or the notification received by the receiving module 601.

The sending module 604 is adapted to instruct the source local management domain where the MN is located before moving to update the location information of the MN saved therein through a central management domain corresponding to the local location management functional entity according to the location registration request, after determining that the MN is moved from outside the local management domain corresponding to the local location management functional entity to the local management domain.

When the location information of the MN saved by the location information storage module 602 is null, it indicates that the MN accesses the local management domain corresponding to the local location management functional entity for the first time, that is, the first registration process.

The location information storage module 602 is further adapted to store routing or IP tunnel information of the MN; after updating the location information of the MN saved in the location information storage module 602, the location information, updating module 603 updates the routing or IP tunnel information of the MN saved by the location information storage module 602.

In an embodiment, the present invention provided a system for MN location management in an NGN. As shown in FIG. 7, the system includes a central mobility management functional entity 701, a source local location management functional entity 702, and a destination local location management functional entity 703.

The central mobility management functional entity 701 is connected to at least one local location management functional entity and is adapted to manage global location information of the MN.

The source local location management functional entity 702 is adapted to manage the location information of a domain where the MN is located before moving.

The destination local location management functional entity 703 is adapted to manage the location information of a domain where the MN is located after moving.

When the MN moves in the same local management domain, the destination local location management functional entity updates the location information of the MN saved therein according to the received location registration request sent by the MN or the agent of the MN. The location information includes the CoA. the local domain address, and the network access identity of the MN.

When the MN moves between different local management domains, and moves from the source local management domain to the destination local management domain, the destination local location management functional entity updates the location information of the MN saved therein according to the received location registration request sent by the MN or the agent of the MN, and instructs the source local location management functional entity to update the location information of the MN saved therein through the central mobility management functional entity.

According to the present invention, the location information management of the MN is made to be hierarchical and localized, thus the traffic of signaling messages in the network and the transmission delay are reduced, and the system crash caused by single point failure of central control in a non-hierarchical and non-localized structure is avoided. When a mobile data transmission plane and a mobile signaling transmission plane are separated from each other, the problem of protection of data transmission and MN signaling messages is solved security association is set up between the mobile management entity of the local management domain and the MN, to protect the MN signaling messages.

In conclusion, the above are merely preferred embodiments of the present invention. However, the scope of the present invention is not limited thereto. Changes or replacements readily apparent to persons skilled in the prior art within the technical scope of the present invention should fall within the scope of the present invention. Therefore, the protection scope of the present invention is subject to the appended claims.

## Claims

1. A method for mobile node (MN) location management in a next generation network (NGN), comprising:
moving, by the MN, from a source local management domain to a destination local management domain;
when the source local management domain and the destination local management domain are a same local management domain, updating, by a local location management functional entity corresponding to the source local management domain or the destination local management domain, location information of the MN saved therein according to a received location registration request sent by the MN or an agent of the MN; and
when the source local management domain and the destination local management domain are different local management domains, updating, by a destination local location management functional entity corresponding to the destination local management domain, the location information of the MN saved therein according to a received location registration request sent by the MN or the agent of the MN, and instructing, through a central mobility management functional entity, a source local management domain entity corresponding to the source local management domain to update the location information of the MN saved therein.

2. The method for MN location management according to claim 1, wherein the location information comprises a Care of Address (CoA), a local domain address, and a network access identity of the MN; and
the updating, by the local location management function corresponding to the source local management domain or the local location management function corresponding to the destination local management domain, the location information of the MN comprises: updating the location information of the MN saved therein according to the CoA, the local domain address, and the network access identity of the MN in the local management domain.

3. The method for MN location management according to claim 1, wherein after the local management domain functional entity and/or the central mobility management functional entity updates the location information of the MN saved therein, the method comprises updating routing or Internet Protocol (IP) tunnel information of the MN saved therein.

4. The method for MN location management according to claim 1, wherein before the destination local location management functional entity receives the location registration request sent by the MN or the agent of the MN, an authentication server generates associated key information after performing access authentication on the MN, and sets up a security association between the MN and the destination local location management functional entity according to the associated key information.

5. The method for MN location management according to claim 2, wherein the updating the location information of the MN comprises: deleting an source CoA of the MN, an source local domain address of the MN, an source network access identity of the MN, and association relations there-between; and creating and saving a destination CoA of the MN, a destination local domain address of the MN, a destination network access identity of the MN, and association rotations there-between.

6. A local location management functional entity in a next generation network (NGN), comprising:
a location information storage module, adapted to save location information of a mobile node (MN);
a receiving module, adapted to receive a location registration request sent by the MN or an agent of the MN, and a notification of updating the location information of the MN sent by a central mobility management functional entity of a central management domain;
a location information updating module, adapted to update the location information of the MN saved by the location information storage module according to the location registration request or the notification received by the receiving module; and
a sending module, adapted to instruct a source local management domain where the MN is located before moving to update the location information of the MN saved therein through a central mobility management functional entity of a central management domain corresponding to the local location management functional entity according to the location registration request, after it is determined that the MN is moved from outside the local management domain corresponding to the local location management functional entity to the local management domain.

7. The local location management functional entity according to claim 6, wherein when the MN accesses the local management domain corresponding to the local location management functional entity for the first time, the location information of the MN saved by the location information storage module is null.

8. The method for MN location management according to claim 6, wherein the location information storage module is further adapted to store routing or Internet Protocol (IP) tunnel information of the MN, and after updating the location information of the MN saved by the location information storage module, the location information updating module updates the routing and IP tunnel information of the MN saved by the location information storage module.

9. A system for mobile node (MN) location management in a next generation network (NGN), comprising:
a central mobility management functional entity, a source local location management functional entity, and a destination local location management functional entity;
wherein when the MN moves in a same local management domain, the destination local location management functional entity updates location information of the MN saved therein according to a received location registration request sent by the MN or an agent of the MN, and the location information comprises a Care of Address (CoA), a local domain address, and a network access identity of the MN;
when the MN moves between different local management domains, the destination local location management functional entity updates the location information of the MN saved therein according to a received location registration request sent by the MN or the agent of the MN, and instructs the source local location management functional entity to update the location information of the MN saved therein through the central mobility management functional entity.

10. The system for MN location management according to claim 9, further comprising: an authentication server, wherein before the destination local location management functional entity receives the location registration request sent by the MN or the agent of the MN, the authentication server generates associated key information after performing access authentication on the MN, and sets up a security association between the MN and the destination local location management functional entity according to the associated key information.
